# EUROPEAN PATENT APPLICATION

(11) **EP 4 296 238 A1**
(43) Date of publication of application: **27.12.2023**
(21) Application number: 23178539.5
(22) Date of filing: 09.06.2023
(51) Int. Cl.: C01G 53/00, H01M 4/505, H01M 4/525

(54) **POSITIVE ELECTRODE ACTIVE MATERIAL PARTICLE, SODIUM ION SECONDARY BATTERY AND METHOD FOR PRODUCING POSITIVE ELECTRODE ACTIVE MATERIAL PARTICLE**

(30) Priority: 14.06.2022 JP 2022096056
(71) Applicant: TOYOTA JIDOSHA KABUSHIKI KAISHA, Toyota-shi, Aichi-ken, 471 8571 (JP)
(72) Inventor: YUBUCHI, So, TOYOTA-SHI, AICHI-KEN, 471-8571 (JP); YOSHIDA, Jun, TOYOTA-SHI, AICHI-KEN, 471-8571 (JP)
(74) Representative: Cabinet Beau de Loménie

(57) **Abstract**

The reversible capacity of P2-type positive electrode active material particle is increased. A positive electrode active material particle of the present disclosure has a P2-type structure, comprises at least one transition metal elements from among Mn, Ni and Co, with Na and O, as constituent elements, and is spherical.

## Description

### FIELD

The present application discloses a positive electrode active material particle, a sodium ion secondary battery and a method for producing a positive electrode active material particle.

### BACKGROUND

Positive electrode active materials having a P2-type structure are known. For example, PTL 1 discloses a complex metal oxide represented by NaₓFe_{y}Mn_{1-y}O₂ (where x < 1, and y ≥ 1/3 and <2/3), as a positive electrode active material having a P2-type structure. PTL 2 discloses a sodium laminar compound represented by Na_{2/3}[Ni_{1/3}Mn_{2/3}]O₂, as a positive electrode active material having a P2-type structure.

### [CITATION LIST]

### [PATENT LITERATURE]

[PTL 1] Japanese Unexamined Patent Publication No. 2012-201588
[PTL 2] Japanese Unexamined Patent Publication No. 2017-045600

### SUMMARY

### [TECHNICAL PROBLEM]

Positive electrode active materials having a P2-type structure are known to have low reversible capacity.

### [SOLUTION TO PROBLEM]

The present application discloses the following aspects as means for solving this problem.

### (Aspect 1)

A positive electrode active material particles,
having a P2-type structure,
comprising at least one transition metal element from among Mn, Ni and Co, with Na and O, as constituent elements, and
being spherical.

### (Aspect 2)

The positive electrode active material particle according to aspect 1, wherein
the surface of the particle comprises crystallites.

### (Aspect 3)

The positive electrode active material particle according to aspect 2, wherein
the diameters of the crystallites are less than 1 µm.

### (Aspect 4)

The positive electrode active material particle according to any one of aspects 1 to 3, wherein
the positive electrode active material particle comprises Na, Mn, Ni, Co and O as constituent elements.

### (Aspect 5)

The positive electrode active material particle according to any one of aspects 1 to 3, wherein
the positive electrode active material particle comprises Na, Mn, Fe and O as constituent elements.

### (Aspect 6)

The positive electrode active material particle according to any one of aspects 1 to 4, wherein
the positive electrode active material particle has a chemical composition represented by NaₐMnₓ₋ₚNi_{y-q}Co_{z-r}M_{p+q+r}O₂ (where 0 < a ≤ 1.00, x + y + z = 1, 0 ≤ p + q + r ≤ 0.15, and M is at least one element selected from among B, Mg, Al, K, Ca, Ti, V, Cr, Fe, Cu, Zn, Ga, Ge, Sr, Y, Zr, Nb, Mo and W).

### (Aspect 7)

A sodium ion secondary battery having a positive electrode, an electrolyte layer and a negative electrode, wherein
the positive electrode comprises the positive electrode active material particle according to any one of aspects 1 to 6.

### (Aspect 8)

A method for producing positive electrode active material particle, the method including:
obtaining a precursor particle,
covering the surface of the precursor particle with a Na salt to obtain a covered particle, and
firing the covered particle to obtain a Na-containing transition metal oxide particle having a P2-type structure,
wherein:
   the precursor particle is composed of a salt containing one or more transition metal elements from among Mn, Ni and Co,
   the precursor particle is spherical,
   the covered particle is obtained by covering 40 area% or more of the surface of the precursor particle with the Na salt, and
   the Na-containing transition metal oxide particle is spherical.

### [EFFECTS]

The positive electrode active material particle having a P2-type structure according to the present disclosure exhibit high reversible capacity.

### BRIEF DESCRIPTION OF DRAWINGS

Fig. 1A is a SEM photograph showing exemplary outer shapes of positive electrode active material particles according to the disclosure.
Fig. 1B is a SEM photograph showing exemplary outer shapes of positive electrode active material particles according to the disclosure.
Fig. 2 is a SEM photograph showing the outer shapes of P2-type positive electrode active material particles according to the prior art.
Fig. 3 schematically shows the structure of a sodium ion secondary battery.
Fig. 4 shows an example of process flow in a method for producing positive electrode active material particles of the disclosure.
Fig. 5A shows an X-ray diffraction pattern of P2-type positive electrode active material particles according to Example 1.
Fig. 5B shows an X-ray diffraction pattern of P2-type positive electrode active material particles according to Example 2.

### DESCRIPTION OF EMBODIMENTS

### 1. Positive electrode active material particle

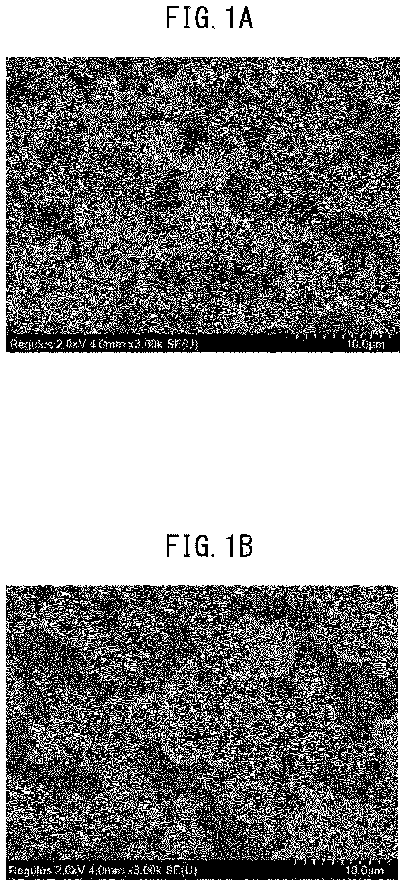

Figs. 1A and B show positive electrode active material particles according to an embodiment. The positive electrode active material particle of the embodiment:
has a P2-type structure,
comprises at least one transition metal elements from among Mn, Ni and Co, with Na and O, as constituent elements, and
is spherical.

### 1.1 Crystal structure

The positive electrode active material particle of the present disclosure includes at least a P2-type structure (belonging to space group P63mc), as the crystal structure. The positive electrode active material particle may also have a P2-type structure while also having a crystal structure other than a P2-type structure. Examples of crystal structures other than a P2-type structure include different crystal structures formed by intercalation/deintercalation of Na in the P2-type structure (for example, a P3-type structure). The positive electrode active material particle may have a P2-type structure as the main phase, or may have a crystal structure other than a P2-type structure as the main phase. The positive electrode active material particle may have a changing crystal structure of the main phase depending on the state of charge-discharge.

The positive electrode active material particle of the present disclosure may be a single crystal composed of a single crystallite, or may be polycrystalline with multiple crystallites. For example, the positive electrode active material particle may have surface comprising multiple crystallites, as shown in Figs. 1A and B. That is, the surface of the particle may have a structure with multiple crystallites linked together.

When the surface of the positive electrode active material particle of the present disclosure comprises multiple crystallites, grain boundaries are present on the particle surface. The grain boundaries can serve as entry and exit points for intercalation. Specifically, having multiple crystallites on the positive electrode active material particle increases entry and exit points for intercalation, lowering the reaction resistance and shortening the sodium ion migration distance so that diffusion resistance is also reduced, and additionally lowers the absolute degree of expansion and contraction during charge-discharge, making cracks less likely to form.

The sizes of the crystallites forming the positive electrode active material particle may be either large or small, but smaller crystallite sizes will result in more grain boundaries, helping to exhibit the aforementioned advantageous effects. For example, higher performance can be more easily obtained if the crystallite diameters forming the positive electrode active material particle are less than 1 µm . The "crystallite" and "crystallite diameter" can be determined by observing the surface of the positive electrode active material particle with a scanning electron microscope (SEM) or transmission electron microscope (TEM). Specifically, the surface of the positive electrode active material particle is observed and each enclosed region delineated by grain boundaries is considered to be a "crystallite". The maximum Feret diameter is calculated for the crystallite, and considered to be the "crystallite diameter". If the particle is composed of a single crystal, then the particle itself can be considered a crystallite, and the maximum Feret diameter of the particle is the "crystallite diameter". Alternatively, the crystallite diameter can be determined by EBSD or XRD. For example, the crystallite diameter can be determined from the half-width of a diffraction line in the XRD pattern, using the Scherrer equation. The positive electrode active material particle of the present disclosure will tend to exhibit higher performance if the crystallite diameter is less than 1 µm, when specified by any method.

Each crystallite forming the positive electrode active material particle of the present disclosure may have first surface exposed on the particle surface, where the first surface is flat. The surface of the positive electrode active material particle may have structure with multiple linked flat sections. During production of the positive electrode active material particle, as explained below, the crystallites are grown on the particle surface until each crystallite is mutually linked with another crystallite, helping to obtain crystallites with flat first surfaces.

### 1.2 Chemical composition

The positive electrode active material particle comprises at least one transition metal element from among Mn, Ni and Co, with Na and O, as constituent elements. The performance of the positive electrode active material particle tends to be even higher when at least Na, Mn, one or more from among Ni and Co, and O are included as constituent elements, and especially when at least Na, Mn, Ni, Co and O are included as constituent elements. The performance of the positive electrode active material particle will also tend to be higher when at least Na, Mn, Fe and O are included as constituent elements. However, the positive electrode active material particle may have a Na abundance of close to 0 since Na is released by charging.

The positive electrode active material particle of the present disclosure may have a chemical composition represented by NaₐMnₓ₋ₚNi_{y-q}Co_{z-r}M_{p+q+r}O₂. In this formula, 0 < a ≤ 1.00, x + y + z = 1, and 0 ≤ p + q + r ≤ 0.15. The letter M represents at least one element selected from among B, Mg, Al, K, Ca, Ti, V, Cr, Fe, Cu, Zn, Ga, Ge, Sr, Y, Zr, Nb, Mo and W. If the positive electrode active material particle has this chemical composition, it will be able to more easily maintain a P2-type structure.

In the chemical composition, "a" may be greater than 0, 0.10 or greater, 0.20 or greater, 0.30 or greater, 0.40 or greater, 0.50 or greater or 0.60 or greater, and 1.00 or smaller, 0.90 or smaller, 0.80 or smaller or 0.70 or smaller. In the same chemical composition, "x" may be 0 or greater, 0.10 or greater, 0.20 or greater, 0.30 or greater, 0.40 or greater or 0.50 or greater, and 1.00 or smaller, 0.90 or smaller, 0.80 or smaller, 0.70 or smaller, 0.60 or smaller or 0.50 or smaller. In the same chemical composition, "y" may be 0 or greater, 0.10 or greater or 0.20 or greater, and 1.00 or smaller, 0.90 or smaller, 0.80 or smaller, 0.70 or smaller, 0.60 or smaller, 0.50 or smaller, 0.40 or smaller, 0.30 or smaller or 0.20 or smaller. In the same chemical composition, "z" may be 0 or greater, 0.10 or greater, 0.20 or greater or 0.30 or greater, and 1.00 or smaller, 0.90 or smaller, 0.80 or smaller, 0.70 or smaller, 0.60 or smaller, 0.50 or smaller, 0.40 or smaller or 0.30 or smaller. M will usually be an element that does not participate in charge-discharge. High charge-discharge capacity will be easier to ensure if p + q + r is 0.15 or smaller. The value of p + q + r may be 0.10 or smaller, or even 0. The composition of O is approximately 2, but may be variable without being limited to exactly 2.0.

### 1.3 Particle shape

The positive electrode active material particle of the present disclosure is spherical, as shown in Figs. 1A and B. As used herein, the phrase "particle is spherical" means that the circularity of the particle is 0.80 or greater. The circularity of the positive electrode active material particle may be 0.81 or greater, 0.82 or greater, 0.83 or greater, 0.84 or greater, 0.85 or greater, 0.86 or greater, 0.87 or greater, 0.88 or greater, 0.89 or greater or 0.90 or greater. The circularity of a particle is defined as 4πS/L². In this formula, S is the orthographic area of the particle, and L is the circumferential length of the orthographic image of the particle. The circularity of the positive electrode active material particle can be determined by observing the outer appearance of the particle using a scanning electron microscope (SEM), a transmission electron microscope (TEM) or an optical microscope. When the positive electrode active material consists of multiple particles, the circularity is measured as an average in the following manner.
(1) First, the particle size distribution of the positive electrode active material particles is measured. Specifically, the 10% cumulative particle diameter (D10) and the 90% cumulative particle diameter (D90), in the volume-based particle size distribution by laser diffraction/scattering are determined.
(2) The outer appearance of the positive electrode active material particles are observed in an image taken with a SEM, TEM or optical microscope, and 100 particles having a circle equivalent diameter (diameter of a circle having the same area as the orthographic area of the particle) of D10 or greater and D90 or lower as determined in (1) above are arbitrarily selected from among the particles in the image.
(3) The circularity of each of the 100 selected particles is determined by image processing, and the average is considered to be the "circularity of the positive electrode active material particles".

The positive electrode active material particle of the present disclosure may be a solid particle, a hollow particle or a particle with voids.

### 1.4 Particle size

The size of the positive electrode active material particle is not particularly restricted, but smaller size is more advantageous. For example, the mean particle diameter (D50) of the positive electrode active material particles of the present disclosure may be 0.1 µm to 10 µm, 1.0 µm to 8.0 µm or 2.0 µm to 6.0 µm. The mean particle diameter (D50) of the positive electrode active material particles is the 50% cumulative particle diameter (D50, median diameter) in the volume-based particle size distribution determined by laser diffraction/scattering.

### 1.5 Effect (Comparison with conventional P2-type positive electrode active material particles)

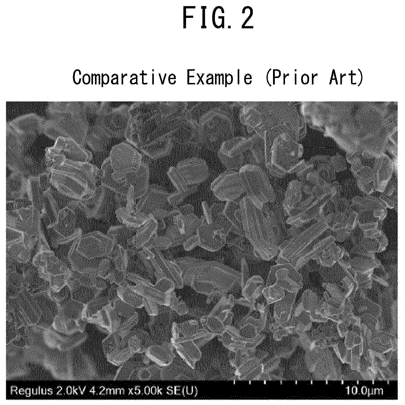

Fig. 2 shows the outer shapes of P2-type positive electrode active material particles of the prior art. A P2-type structure is hexagonal with a large Na ion diffusion coefficient, tending to produce crystal growth in a specific direction. If the transition metal element in the P2-type structure includes one or more from among Mn, Ni and Co, crystal growth will be promoted in a laminar manner in a specific direction. For Na-containing transition metal oxide particle having a P2-type structure, therefore, it has only been possible in the prior art to produce laminar form with a high aspect ratio with crystal growth direction biased in a specific direction, as shown in Fig. 2. Laminar growth of a P2-type structure is a basic principle and has been considered unavoidable. Conventionally, therefore, P2-type positive electrode active material particle has been assumed to be laminar, and improvement in its performance as an active material has been achieved by controlling the chemical composition or crystal structure.

In contrast, the positive electrode active material particle of the present disclosure has a P2-type structure, comprises one or more transition metal elements from among Mn, Ni and Co, and is spherical. Spherical positive electrode active material particle is advantageous because when it is present in a positive electrode of a sodium ion secondary battery, it becomes easier to limit crystallite growth and to reduce the sizes of the crystallites, compared to when non-spherical positive electrode active material particle (such as the aforementioned laminar particle) is present. In other words, with the spherical positive electrode active material particle, the reaction resistance tends to be reduced and the diffusion resistance inside the active material tends to be lower, due to the smaller crystallite size. The tortuosity is also lowered due to the sphericity, and this is thought to lower sodium ion conductive resistance in the layer forming the positive electrode. As a result, the rate characteristic is improved and the reversible capacity tends to be greater. Such spherical positive electrode active material particle can be produced by the novel method of the present disclosure. The method for producing the positive electrode active material particle is described below.

### 2. Positive electrode

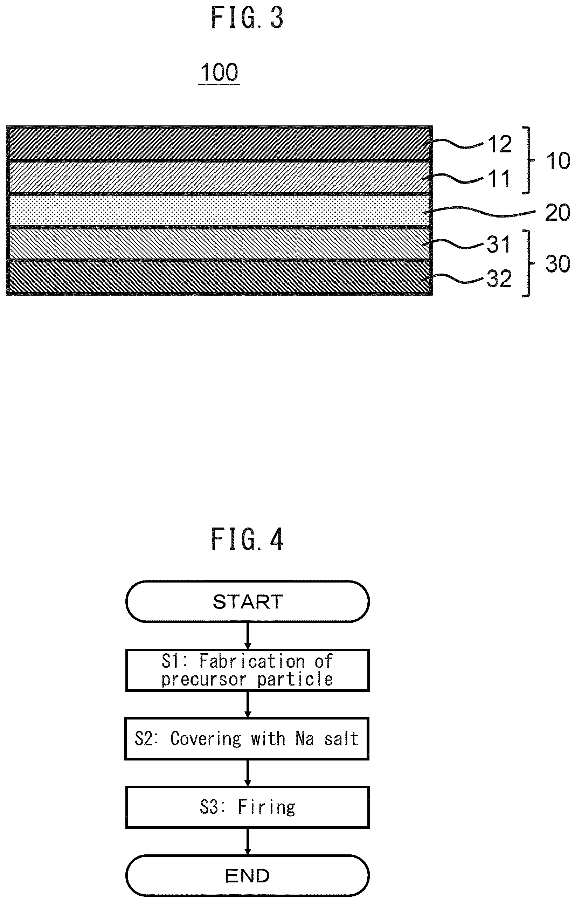

Another aspect of the technology of the present disclosure is that the positive electrode contains the aforementioned positive electrode active material. Specifically, the positive electrode of the present disclosure has the positive electrode active material particle of the present disclosure as positive electrode active material. As shown in Fig. 3, the positive electrode 10 according to one embodiment may comprise a positive electrode active material layer 11 and a positive electrode collector 12. In this case, the positive electrode active material layer 11 may include the aforementioned positive electrode active material particle.

### 2.1 Positive electrode active material layer

The positive electrode active material layer 11 may include at least the aforementioned positive electrode active material particle as the positive electrode active material, and optionally also an electrolyte, conductive aid and binder. The positive electrode active material layer 11 may also include other additives. The contents of the positive electrode active material particle, electrolyte, conductive aid and binder in the positive electrode active material layer 11 may be determined as appropriate for the desired battery performance. For example, the content of the positive electrode active material particle may be 40 mass% or greater, 50 mass% or greater or 60 mass% or greater, and 100 mass% or lower or 90 mass% or lower, with respect to 100 mass% as the total positive electrode active material layer 11 (solid content). The form of the positive electrode active material layer 11 is not particularly restricted, and it may be an essentially flat sheet-like positive electrode active material layer 11. The thickness of the positive electrode active material layer 11 is not particularly restricted, and may be 0.1 µm or greater or 1 µm or greater, and 2 mm or smaller or 1 mm or smaller, for example.

### 2.1.1 Positive electrode active material

The positive electrode active material layer 11 may include the positive electrode active material particle of the present disclosure alone as the positive electrode active material. Alternatively, the positive electrode active material layer 11 may include a different type of positive electrode active material (another positive electrode active material) in addition to the positive electrode active material particle of the present disclosure. The content of the other positive electrode active material in the positive electrode active material layer 11 may be a low content from the viewpoint of further increasing the effect of the technology of the disclosure. For example, the content of positive electrode active material particle of the present disclosure may be 50 mass% or greater, 60 mass% or greater, 70 mass% or greater, 80 mass% or greater, 90 mass% or greater, 95 mass% or greater or 99 mass% or greater, based on 100 mass% as the total amount of the positive electrode active material in the positive electrode active material layer 11.

### 2.1.2 Electrolyte

The electrolyte to be optionally included in the positive electrode active material layer 11 may be a solid electrolyte, a liquid electrolyte (electrolyte solution), or a combination thereof.

The solid electrolyte used may be one that is publicly known as a solid electrolyte for sodium ion secondary batteries. The solid electrolyte may be an inorganic solid electrolyte or an organic polymer electrolyte. An inorganic solid electrolyte exhibits notably superior ionic conductivity and heat resistance. Inorganic solid electrolytes include one or more types selected from among oxides such as Na₃Zr₂PSi₂O₁₂ and Na₂O-11Al₂O₃; hydrides and borides such as NaBH₄, NaB₁₀H₁₀, NaCB₉H₁₀, NaCB₁₁H₁₂ and NaB₁₂Cl₁₂; sulfides such as Na₃PS₄, Na₃SbS₄ and Na_{2.88}Sb_{0.88}W_{0.12}S₄; and fluorides such as NaPF₆ and NaBF₄. The solid electrolyte may be particulate, for example. The solid electrolyte may be of a single type alone, or two or more different types may be used in combination.

The electrolyte solution may include sodium ion as a carrier ion, for example. The electrolyte solution may be an aqueous electrolyte solution or a nonaqueous electrolyte solution. The composition of the electrolyte solution may be a publicly known composition for sodium ion secondary battery electrolyte solutions. For example, a solution of a sodium salt at a certain concentration in a carbonate-based solvent may be used as the electrolyte solution. Examples of carbonate-based solvents include fluoroethylene carbonate (FEC), ethylene carbonate (EC), diethyl carbonate (DEC) and dimethyl carbonate (DMC). An example of a sodium salt is NaPF₆.

### 2.1.3 Conductive aid

Examples of conductive aids to be optionally added in the positive electrode active material layer 11 include carbon materials such as vapor-grown carbon fiber (VGCF), acetylene black (AB), Ketchen black (KB), carbon nanotubes (CNT) and carbon nanofibers (CNF); and metal materials such as nickel, aluminum and stainless steel. The conductive aid may be particulate or filamentous, for example, and its size is not particularly restricted. The conductive aid may be of a single type alone, or two or more different types may be used in combination.

### 2.1.4 Binder

Examples of binders to be optionally added in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders and polyimide (PI)-based binders. The binder may be of a single type alone, or two or more different types may be used in combination.

### 2.2 Positive electrode collector

As shown in Fig. 3, the positive electrode 10 may comprise a positive electrode collector 12 in contact with the positive electrode active material layer 11. The positive electrode collector 12 used may be any common one used as a positive electrode collector for a battery. The positive electrode collector 12 may be used as a foil, laminar form, mesh form, punching metal or foam. The positive electrode collector 12 may also be made of a metal foil or metal mesh. A metal foil is particularly suitable in terms of handleability. The positive electrode collector 12 may also comprise a plurality of foils. The metal composing the positive electrode collector 12 may be Cu, Ni, Cr, Au, Pt, Ag, Al, Fe, Ti, Zn, Co or stainless steel. From the viewpoint of ensuring oxidation resistance, the positive electrode collector 12 most preferably contains Al. The positive electrode collector 12 may also have a coating layer on the surface, in order to adjust the resistance. The positive electrode collector 12 may also have a metal plated or vapor deposited on a metal foil or base. When the positive electrode collector 12 is made of a plurality of metal foils, it may also have different layers between the plurality of metal foils. The thickness of the positive electrode collector 12 is not particularly restricted. For example, it may be 0.1 µm or greater or 1 µm or greater, or 1 mm or smaller or 100 µm or smaller.

### 2.3 Other components

In addition to the structure described above, the positive electrode 10 may further comprise a structure commonly used in secondary battery positive electrodes. For example, it may have a tab or terminals. The positive electrode 10 may be produced by a publicly known method, except for the use of the positive electrode active material particle with a P2-type structure of the present disclosure as the positive electrode active material. For example, a positive electrode mixture containing the components mentioned above may be dry or wet molded to easily form a positive electrode active material layer 11. The positive electrode active material layer 11 may be formed together with the positive electrode collector 12, or it be formed separately from the positive electrode collector 12.

### 3. Sodium ion secondary battery

As shown in Fig. 3, the sodium ion secondary battery 100 of one embodiment has a positive electrode 10, an electrolyte layer 20 and a negative electrode 30. The positive electrode 10 includes positive electrode active material particle of the present disclosure. As mentioned above, the positive electrode active material particle of the present disclosure exhibit high reversible capacity. Including positive electrode active material particle of the present disclosure in the positive electrode of the sodium ion secondary battery 100 will help to improve the performance of the secondary battery 100. The construction of the positive electrode 10 of the sodium ion secondary battery 100 is as described above.

### 3.1 Electrolyte layer

The electrolyte layer 20 includes at least an electrolyte. When the sodium ion secondary battery 100 is a solid-state battery (a battery with a solid electrolyte which may be used in partial combination with a liquid electrolyte, or optionally as an all-solid-state battery without a liquid electrolyte), the electrolyte layer 20 may include a solid electrolyte and optionally also a binder. In this case there is no particular restriction on the total content of the solid electrolyte and binder of the electrolyte layer 20. When the sodium ion secondary battery 100 is an liquid electrolyte battery, the electrolyte layer 20 may include an electrolyte solution and may also have a separator to hold the electrolyte solution and to prevent contact between the positive electrode active material layer 11 and the negative electrode active material layer 31. The thickness of the electrolyte layer 20 is not particularly restricted, and may be 0.1 µm or greater or 1 µm or greater, and 2 mm or smaller or 1 mm or smaller, for example.

The electrolyte in the electrolyte layer 20 may be selected as appropriate from among the aforementioned electrolytes that can be included in the positive electrode active material layer. The binder to be included in the electrolyte layer 20 may also be selected as appropriate from among the aforementioned binders that can be included in the positive electrode active material layer. The electrolyte and binder may be of a single type alone, or two or more different types may be used in combination. The separator may be the one commonly used in sodium ion secondary batteries, examples of which include resins such as polyethylene (PE), polypropylene (PP), polyesters and polyamides. The separator may have a monolayer structure or a layered structure. Examples of separators with layered structures include separators with PE/PP two-layer structures, and separators with PP/PE/PP or PE/PP/PE three-layer structures. The separator may be made of a nonwoven fabric such as a cellulose nonwoven fabric, resin nonwoven fabric or glass fiber nonwoven fabric.

### 3.2 Negative electrode

As shown in Fig. 3, the negative electrode 30 may comprise a negative electrode active material layer 31 and a negative electrode collector 32.

### 3.2.1 Negative electrode active material layer

The negative electrode active material layer 31 is a layer that includes at least a negative electrode active material, and it may also optionally include an electrolyte, a conductive aid and a binder. The negative electrode active material layer 31 may also include other additives. The contents of the negative electrode active material, electrolyte, conductive aid and binder in the negative electrode active material layer 31 may be determined as appropriate for the desired battery performance. For example, the content of the negative electrode active material may be 40 mass% or greater, 50 mass% or greater or 60 mass% or greater, and 100 mass% or lower or 90 mass% or lower, with respect to 100 mass% as the total negative electrode active material layer 31 (solid content). The form of the negative electrode active material layer 31 is not particularly restricted, and it may be an essentially flat sheet-like negative electrode active material layer. The thickness of the negative electrode active material layer 31 is not particularly restricted, and may be 0.1 µm or greater or 1 µm or greater, and 2 mm or smaller or 1 mm or smaller, for example.

The negative electrode active material used may be any of various substances whose potential for storing and releasing sodium ions (charge-discharge potential) is electronegative compared to the positive electrode active material of the present disclosure. For example, an inorganic negative electrode active material such as sodium metal may be used, or a negative electrode active material comprising an organic compound may be used. The negative electrode active material may be of a single type alone, or two or more different types may be used in combination.

The form of the negative electrode active material may be any common form used as a negative electrode active material for a battery. The negative electrode active material may be particulate, for example. The negative electrode active material particle may be primary particle, or secondary particle which is aggregate of multiple primary particles. The mean particle diameter (D50) of the negative electrode active material particles may be 1 nm or greater, 5 nm or greater or 10 nm or greater, and 500 µm or smaller, 100 µm or smaller, 50 µm or smaller or 30 µm or smaller, for example. Alternatively, the negative electrode active material may be in a sheet (foil or film) form such as sodium foil. That is, the negative electrode active material layer 31 may be made of a sheet of the negative electrode active material.

The electrolyte to be optionally included in the negative electrode active material layer 31 may be the aforementioned solid electrolyte or electrolyte solution, or a combination thereof. The conductive aid to be optionally included in the negative electrode active material layer 31 may be any of the aforementioned carbon materials or metal materials. The binder to be optionally included in the negative electrode active material layer 31 may be selected as appropriate from among the aforementioned binders that can be included in the positive electrode active material layer 11, for example. The electrolyte, conductive aid and binder may be of a single type alone, or two or more different types may be used in combination.

### 3.2.2 Negative electrode collector

As shown in Fig. 3, the negative electrode 30 may comprise a negative electrode collector 32 in contact with the negative electrode active material layer 31. The negative electrode collector 32 used may be any common one used as a negative electrode collector for a battery. The negative electrode collector 32 may be used as a foil, laminar form, mesh form, punching metal or foam. The negative electrode collector 32 may also be a metal foil or metal mesh, or alternatively a carbon sheet. A metal foil is particularly suitable in terms of handleability. The negative electrode collector 32 may also comprise a plurality of foils or sheets. The metal composing the negative electrode collector 32 may be Cu, Ni, Cr, Au, Pt, Ag, Al, Fe, Ti, Zn, Co or stainless steel. From the viewpoint of ensuring reduction resistance, the negative electrode collector 32 most preferably includes at least one type of metal selected from among Cu, Ni and stainless steel. The negative electrode collector 32 may also have a coating layer on the surface, in order to adjust the resistance. The negative electrode collector 32 may also have a metal plated or vapor deposited on a metal foil or base. When the negative electrode collector 32 is made of a plurality of metal foils, it may also have different layers between the plurality of metal foils. The thickness of the negative electrode collector 32 is not particularly restricted. For example, it may be 0.1 µm or greater or 1 µm or greater, or 1 mm or smaller or 100 µm or smaller.

### 3.3 Other aspects

The sodium ion secondary battery 100 may have the structure described above housed inside an exterior body. The exterior body used may be any publicly known type used as an exterior body for batteries. A plurality of batteries 100 may also be optionally electrically connected and optionally stacked to form a battery assembly. In this case the assembled batteries may be housed inside publicly known battery cases. The sodium ion secondary battery 100 may also be provided with obvious structural parts such as necessary terminals and the like. Examples of forms for the sodium ion secondary battery 100 include coin, laminated, cylindrical and rectilinear battery types.

The sodium ion secondary battery 100 can be produced by a publicly known method. For example, it can be produced in the following manner. However, the method for producing the sodium ion secondary battery 100 is not limited to this method, and alternatively each of the layers may be formed by dry molding, for example.
(1) The positive electrode active material that is to form the positive electrode active material layer is dispersed in a solvent to obtain a positive electrode layer slurry. The solvent used may be, but is not limited to, water or an organic solvent. A doctor blade is used to coat the positive electrode layer slurry onto the surface of a positive electrode collector, and it is then dried to form a positive electrode active material layer on the positive electrode collector surface, obtaining a positive electrode.
(2) The negative electrode active material that is to form the negative electrode active material layer is dispersed in a solvent to obtain a negative electrode layer slurry. The solvent used may be, but is not limited to, water or an organic solvent. A doctor blade is used to coat the negative electrode layer slurry onto the surface of a negative electrode collector, and it is then dried to form a negative electrode active material layer on the negative electrode collector surface, obtaining a negative electrode.
(3) Each layer is stacked with the electrolyte layer (solid electrolyte layer or separator) sandwiched between the negative electrode and positive electrode, to obtain a stack having a negative electrode collector, negative electrode active material layer, electrolyte layer, positive electrode active material layer and positive electrode collector in that order. Terminals and other members are attached to the stack as necessary.
(4) The stack is housed in a battery case, the battery case then being filled with electrolyte solution in the case of an electrolyte battery, and the stack inside the battery case is sealed with the stack immersed in the electrolyte solution, to obtain a secondary battery. For an electrolyte battery, the electrolyte solution may be added to the negative electrode active material layer, separator and positive electrode active material layer at stage (3).

### 4. Method for producing a positive electrode active material particle

Another aspect of the technology of the present disclosure is a method for producing the positive electrode active material particle. As shown in Fig. 4, the method for producing the positive electrode active material particle according to one embodiment includes:
obtaining a precursor particle (step S1),
covering the surface of the precursor particle with a Na salt to obtain a covered particle (step S2), and
firing the covered particle to obtain a Na-containing transition metal oxide particle having a P2-type structure (step S3).

The precursor particle is composed of a salt containing one or more transition metal elements from among Mn, Ni and Co,
the precursor particle is spherical,
the covered particle is obtained by covering 70 area% or more of the surface of the precursor particle with the Na salt, and
the Na-containing transition metal oxide particle is spherical.

### 4.1 Step S1

In step S1, precursor particle is obtained. The precursor particle is of a salt containing one or more transition metal elements from among Mn, Ni and Co. The precursor particle may be one or more from among carbonates, sulfates, nitrates, acetates and hydroxides, for example. Specifically, they may be of a salt represented by MeCO₃ (where Me is one or more transition metal elements from among Mn, Ni and Co), or a salt represented by MeSO₄, or a salt represented by Me(NO₃)₂, or a salt represented by Me(CH₃COO)₂, or a compound represented by Me(OH)₂. The precursor particle may also include at least one element M selected from among B, Mg, Al, K, Ca, Ti, V, Cr, Fe, Cu, Zn, Ga, Ge, Sr, Y, Zr, Nb, Mo and W, in addition to the transition metal element Me.

The precursor particle is spherical. The definition of "spherical" here is the same as explained above. If the precursor particle is spherical, then the shape of the finally obtained positive electrode active material particle will also tend to be spherical. The size of the spherical precursor particle is not particularly limited. Spherical precursor particle can be obtained by a solution method such as coprecipitation or a sol-gel method, for example. Specifically, in the case of coprecipitation, an aqueous solution of MeSOq and an aqueous solution of Na₂CO₃ are prepared, mixing each solution dropwise to obtain a precipitate. The precipitate consists of spherical precursor particle represented by MeCO₃. A sulfate of M may also be dissolved in the MeSO₄ solution to obtain a carbonate including Me and M as precursor particle.

### 4.2 Step S2

In step S2, the surface of the precursor particle is covered with a Na salt to obtain a covered particle. The covered particle is obtained by covering 40 area% or more of the surface of the precursor particle with the Na salt. The covered particle may also be obtained by covering 50 area% or more, 60 area% or more, or 70 area% of the surface of the precursor particle with the Na salt. Examples of Na salts include carbonates and nitrates.

Any of various methods may be used to cover 40 area% or more of the surface of the precursor particle with the Na salt. Examples include tumbling flow coating methods and spray dry methods. Specifically, a coating solution dissolving the Na salt is prepared, and then dried, either simultaneously while contacting the coating solution with the entire surfaces of the precursor particles, or after contact. The coating conditions (temperature, time, number of coatings) may be adjusted for coverage of 40 area% or more of the surfaces of the precursor particle with the Na salt. Based on knowledge by the present inventors, a low Na salt coverage factor tends to result in abnormal growth of P2-type crystal on the covered particle surface when the covered particle is fired, making it impossible to obtain the spherical Na-containing transition metal oxide particle. A large Na salt coverage factor allows the P2-type crystal crystallites to be smaller when the covered particle is fired, tending to result in covered particle with more "spherical" shapes corresponding to the shape of the precursor particle. The Na salt coverage of the covered particle may be a sufficient amount (sufficient doping amount of Na) for obtaining a P2-type structure.

### 4.3 Step S3

In step S3, the covered particle is fired to obtain a Na-containing transition metal oxide particle having a P2-type structure. The Na-containing transition metal oxide particle is spherical at this point.

The firing temperature may be any temperature at which a P2-type structure is formed and the resulting Na-containing transition metal oxide particle is spherical. If the firing temperature is too low, Na doping will be prevented and it will be difficult to obtain a P2-type structure. If the firing temperature is too high, an O3-type structure will result instead of a P2-type structure. The firing temperature may be 700°C to 1100°C, or 800°C to 1000°C, for example.

The firing time may be any time during which the resulting Na-containing transition metal oxide particle becomes spherical. As mentioned above, due to the high Na salt coverage factor on the covered particle in the method of the present disclosure, P2-type crystals with small crystallites on the particle surface tend to form when the covered particle is fired. In the method of the present disclosure, P2-type crystals are grown along the particle surfaces so that each P2-type crystallite is linked with another P2-type crystallite, to obtain spherical Na-containing transition metal oxide particles. If the firing time is too short, Na doping may not occur and it may not be possible to obtain the desired P2-type structure. If the firing time is too long, on the other hand, excessive growth of a P2-type structure will take place, resulting in laminar particle instead of spherical particle. The present inventors have confirmed that a firing time of 30 minutes to 3 hours is conducive to obtaining the spherical Na-containing transition metal oxide particle. When synthesizing a positive electrode active material by firing, it is generally the case that a longer firing time (such as ≥5 hours) will allow the target crystal phase to be obtained. In the method of the present disclosure, however, the firing time is 3 hours or less, thereby helping to prevent excessive growth of P2-type crystals to obtain the spherical Na-containing transition metal oxide particle. The Na-containing transition metal oxide particle obtained after firing may have a structure with multiple crystallites on its surface, and with linkage between the crystallites.

The firing atmosphere is not particularly restricted and may be an oxygen-containing atmosphere such as air, or an inert gas atmosphere, for example.

### 5. Method of increasing reversible capacity of sodium ion secondary battery

One aspect of the technology of the present disclosure is a method for increasing the reversible capacity of a sodium ion secondary battery. Specifically, the method for increasing the reversible capacity of the sodium ion secondary battery of the present disclosure includes using the positive electrode active material particle of the present disclosure in a positive electrode of a sodium ion secondary battery.

### 6. Vehicle with sodium ion secondary battery

As mentioned above, including positive electrode active material particle of the present disclosure in a positive electrode of a sodium ion secondary battery can increase the reversible capacity of the sodium ion secondary battery. A sodium ion secondary battery having high reversible capacity can be suitably used in one or more types of vehicles selected from among hybrid vehicles (HEV), plug-in hybrid vehicles (PHEV) and battery electric vehicles (BEV). Specifically, one aspect of the technology of the disclosure is a vehicle with a sodium ion secondary battery, wherein the sodium ion secondary battery has a positive electrode, an electrolyte layer and a negative electrode, and the positive electrode includes the positive electrode active material particle of the present disclosure.

### EXAMPLES

Embodiments of the positive electrode active material particle, sodium ion secondary battery and method for producing the positive electrode active material particle of the present disclosure were described above, but the positive electrode active material particle, sodium ion secondary battery and method for producing the positive electrode active material particle of the present disclosure may incorporate various modifications to these embodiments which do not deviate from the gist of the invention. The technology of the present disclosure will now be described in greater detail using Examples, with the understanding that these Examples are not intended to be limitative in any way.

### 1. Example 1

### 1.1 Fabrication of precursor particles

(1) After weighing out MnSO₄·5H₂O, NiSO₄·6H₂O and CoSO₄·7H₂O to the target compositional ratio, they were dissolved in distilled water to a concentration of 1.2 mol/L to obtain a first solution. In a separate container, Na₂CO₃ was dissolved in distilled water to a concentration of 1.2 mol/L to obtain a second solution.
(2) A 500 mL portion of the first solution and a 500 mL portion of the second solution were each added dropwise at a rate of about 4 mL/min into a reactor (with baffle board) already containing 1000 mL of purified water.
(3) Upon completion of the dropwise addition, the mixture was stirred for 1 h at room temperature at a stirring speed of 150 rpm to obtain a product.
(4) The product was washed with purified water and subjected to solid-liquid separation using a centrifugal separator to obtain a precipitate.
(5) The precipitate was dried overnight at 120°C and crushed with a mortar, and then the microparticles were removed out by air classification to obtain precursor particles. The precursor particles were spherical particles composed of transition metal (Mn, Ni and Co) carbonates, with a circularity of 0.98.

### 1.2 Fabrication of covered particles

(1) The precursor particles and Na₂CO₃ as a Na salt were weighed out to a composition of Na_{0.7}Mn_{0.5}Ni_{0.2}Co_{0.3}O₂.
(2) The weighed Na salt and precursor were mixed with a spray dryer. Specifically, the weighed Na salt and precursor were added to a solvent (water), dissolving the Na salt, and the solution of the precursor dispersion was spray dried. The spray drying temperature was 200°C and the spray pressure was 0.3 MPa. Spray drying produced covered particles having the precursor particle surfaces covered with the Na salt to a 77 area%.

### 1.3 Fabrication of Na-containing transition metal oxide particles having a P2-type structure

(1) An alumina crucible was used for firing of the covered particles in an air atmosphere to obtain a fired body. The firing temperature was 900°C and the firing time was 1 hour.
(2) The fired body was shredded using a mortar under a dry atmosphere, to obtain Na-containing transition metal oxide particles having a P2-type structure (P2-type particles) as positive electrode active material particles.

### 1.4 Positive electrode active material particle property evaluation and observation

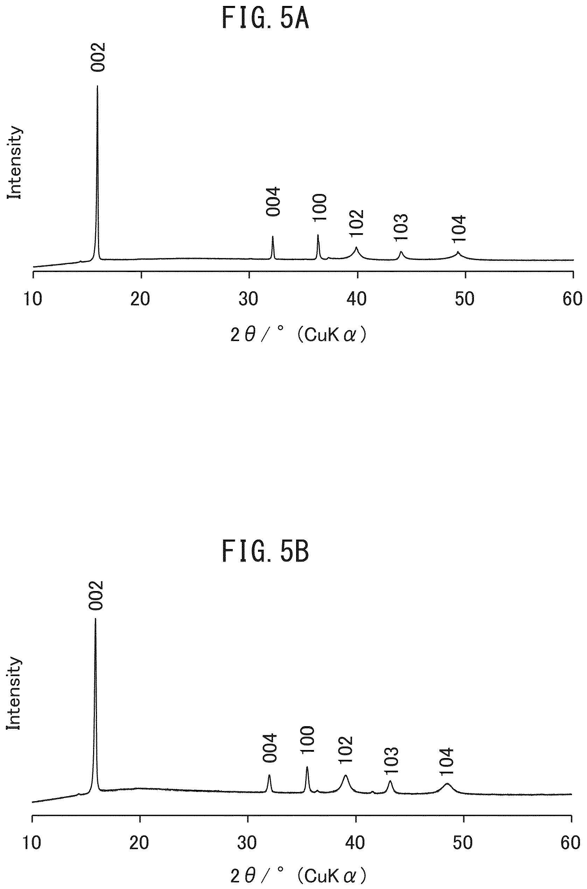

Fig. 5A shows an X-ray diffraction pattern of positive electrode active material particles according to Example 1. As shown in Fig. 5A, the positive electrode active material particles of Example 1 had a P2-type structure belonging to the space group P63mc. Elemental analysis confirmed that the positive electrode active material particles of Example 1 had a chemical composition represented by Na_{0.7}Mn_{0.5}Ni_{0.2}Co_{0.3}O₂.

Fig. 1A shows a SEM photograph of the outer appearance of the positive electrode active material particles of Example 1. The results of image analysis showed that the positive electrode active material particles of Example 1 were spherical particles with a circularity of 0.86. As shown in Fig. 1A, the surfaces of the positive electrode active material particles of Example 1 comprised crystallites, the crystallite diameters being less than 1 µm. As shown in Fig. 1A, each crystallite had a first surface exposed on the particle surface, where the first surface was flat. The mean particle diameter (D50) of the positive electrode active material particles of Example 1 was 3.6 µm.

### 2. Example 2

### 2.1 Fabrication of precursor particles

(1) After weighing out MnSO₄·5H₂O and FeSO₄·7H₂O to the target compositional ratio, they were dissolved in distilled water to a concentration of 1.2 mol/L to obtain a first solution. In a separate container, Na₂CO₃ was dissolved in distilled water to a concentration of 1.2 mol/L to obtain a second solution.
(2) A 500 mL portion of the first solution and a 500 mL portion of the second solution were each added dropwise at a rate of about 4 mL/min into a reactor (with baffle board) already containing 1000 mL of purified water.
(3) Upon completion of the dropwise addition, the mixture was stirred for 1 h at room temperature at a stirring speed of 150 rpm to obtain a product.
(4) The product was washed with purified water and subjected to solid-liquid separation using a centrifugal separator to obtain a precipitate.
(5) The precipitate was dried overnight at 120°C and crushed with a mortar, and then the microparticles were removed out by air classification to obtain precursor particles. The precursor particles were spherical particles composed of transition metal (Mn and Fe) carbonates, with a circularity of 0.87.

### 2.2 Fabrication of covered particles

(1) The precursor particles and Na₂CO₃ as a Na salt were weighed out to a composition of Na_{0.7}Mn_{0.5}Fe_{0.5}O₂.
(2) The weighed Na salt and precursor were mixed with a spray dryer. Specifically, the weighed Na salt and precursor were added to a solvent (water), dissolving the Na salt, and the solution of the precursor dispersion was spray dried. The spray drying temperature was 200°C and the spray pressure was 0.3 MPa. Spray drying produced covered particles having the precursor particle surfaces covered with the Na salt to a 75 area%.

### 2.3 Fabrication of Na-containing transition metal oxide particles having a P2-type structure

(1) An alumina crucible was used for firing of the covered particles in an air atmosphere to obtain a fired body. The firing temperature was 900°C and the firing time was 1 hour.
(2) The fired body was shredded using a mortar under a dry atmosphere, to obtain Na-containing transition metal oxide particles having a P2-type structure (P2-type particles) as positive electrode active material particles.

### 2.4 Positive electrode active material particle property evaluation and observation

Fig. 5B shows an X-ray diffraction pattern of positive electrode active material particles according to Example 2. As shown in Fig. 5B, the positive electrode active material particles of Example 2 had a P2-type structure belonging to the space group P63mc. Elemental analysis confirmed that the positive electrode active material particles of Example 2 had a chemical composition represented by Na_{0.7}Mn_{0.5}Fe_{0.5}O₂.

Fig. 1B shows a SEM photograph of the outer appearance of the positive electrode active material particles of Example 2. The results of image analysis showed that the positive electrode active material particles of Example 2 were spherical particles with a circularity of 0.90. As shown in Fig. 1B, the surfaces of the positive electrode active material particles of Example 2 comprised crystallites, the crystallite diameters being less than 1 µm. As shown in Fig. 1B, each crystallite had a first surface exposed on the particle surface, where the first surface being flat. The mean particle diameter (D50) of the positive electrode active material particles of Example 2 was 4.8 µm.

### 3. Comparative Example 1

### 3.1 Fabrication of precursor particles

Spherical precursor particles were fabricated in the same manner as Example 1.

### 3.2 Fabrication of covered particles

(1) The precursor particles and Na₂CO₃ as a Na salt were weighed out to a composition of Na_{0.7}Mn_{0.5}Ni_{0.2}Co_{0.3}O₂.
(2) The weighed Na salt and precursor were mixed with a mortar to obtain covered particles where the surfaces of the precursor particles were covered with the Na salt to 28 area%.

### 3.3 Fabrication of Na-containing transition metal oxide particles having a P2-type structure

Na-containing transition metal oxide particles having a P2-type structure (P2-type particles) were obtained as positive electrode active material particles in the same manner as Example 1, except for using the covered particles with a coverage factor of 28 area%.

### 3.4 Positive electrode active material particle property evaluation and observation

Upon confirming the X-ray diffraction pattern of the positive electrode active material particles of Comparative Example 1, the particles were found to have a P2-type structure belonging to the space group P63mc, similar to the positive electrode active material particles of Example 1. Elemental analysis confirmed that the positive electrode active material particles of Comparative Example 1 had a chemical composition represented by Na_{0.7}Mn_{0.5}Ni_{0.2}Co_{0.3}O₂, similar to the positive electrode active material particles of Example 1.

Fig. 2 shows a SEM photograph of the outer appearance of the positive electrode active material particles of Comparative Example 1. The positive electrode active material particles of Comparative Example 1 were laminar particles with an aspect ratio of 2 or greater, and a circularity of 0.63. As shown in Fig. 2, the positive electrode active material particles of Comparative Example 1 had laminar, coarse growth of each crystallite, with a single crystallite diameter of several µm (>1 µm).

### 4. Comparative Example 2

### 4.1 Fabrication of precursor particles

Spherical precursor particles were fabricated in the same manner as Example 2.

### 4.2 Fabrication of covered particles

(1) The precursor particles and Na₂CO₃ as a Na salt were weighed out to a composition of Na_{0.7}Mn_{0.5}Fe_{0.5}O₂, under a dry atmosphere.
(2) The weighed Na salt and precursor were mixed with a mortar to obtain covered particles where the surfaces of the precursor particles were covered with the Na salt to 22 area%.

### 4.3 Fabrication of Na-containing transition metal oxide particles having a P2-type structure

Na-containing transition metal oxide particles having a P2-type structure (P2-type particles) were obtained as positive electrode active material particles in the same manner as Example 2, except for using the covered particles with a coverage factor of 22 area%.

### 4.4 Positive electrode active material particle property evaluation and observation

Upon confirming the X-ray diffraction pattern of the positive electrode active material particles of Comparative Example 2, the particles were found to have a P2-type structure belonging to the space group P63mc, similar to the positive electrode active material particles of Example 2. Elemental analysis confirmed that the positive electrode active material particles of Comparative Example 2 had a chemical composition represented by Na_{0.7}Mn_{0.5}Fe_{0.5}O₂, similar to the positive electrode active material particles of Example 2.

When the outer appearance of the positive electrode active material particles of Comparative Example 2 were observed by SEM, the positive electrode active material particles of Comparative Example 2 were found to be laminar particles with an aspect ratio of 2 or greater, and a circularity of 0.68. The positive electrode active material particles of Comparative Example 2 had laminar, coarse growth of each crystallite, with a single crystallite diameter of several µm (> 1 µm), similar to the positive electrode active material of Comparative Example 1.

### 5. Fabrication of evaluation cells

The positive electrode active material particles of Example 1, Example 2, Comparative Example 1 and Comparative Example 2 were each used to fabricate a coin cell. The procedure for fabricating the coin cells was as follows.
(1) The positive electrode active material particles, acetylene black (AB) as a conductive aid and polyvinylidene fluoride (PVdF) as a binder were weighed out to a mass ratio of positive electrode active material particles:AB:PVdF = 85:10:5 and dispersed and mixed in N-methyl-2-pyrrolidone to obtain a positive electrode mixture slurry. The positive electrode mixture slurry was coated onto an aluminum foil and vacuum dried overnight at 120°C to obtain a positive electrode as a laminate of a positive electrode active material layer and a positive electrode collector.
(2) The electrolyte solution used was solution of NaPF₆ at 1 M concentration in a solvent of EC and DEC mixed to a volume ratio of 1:1.
(3) Metal sodium foil was prepared as the negative electrode.
(4) The positive electrode, electrolyte solution and negative electrode were used to fabricate a coin cell (CR2032).

### 6. Evaluation of charge-discharge characteristic

(1) The coin cells of Example 1 and Comparative Example 1 were subjected to charge-discharge at 0.1 C in a voltage range of 1.0-4.5 V, in a thermostatic bath held at 25°C, and the reversible capacity of each was measured. The results are shown in Table 1.
(2) The coin cells of Example 2 and Comparative Example 2 were subjected to charge-discharge at 0.1 C in a voltage range of 1.0-4.3 V, in a thermostatic bath held at 25°C, and the reversible capacity of each was measured. The results are shown in Table 1.

**[Table 1]**

| | Particle circularity | Particle shapes | Chemical composition | Reversible capacity [mAh/g] |
|---|---|---|---|---|
| Example 1 | 0.86 | Spherical | Na_{0.7}Mn_{0.5}Ni_{0.2}Co_{0.3}O₂ | 185 |
| Example 2 | 0.90 | Spherical | Na_{0.7}Mn_{0.5}Fe_{0.5}O₂ | 209 |
| Comp. Example 1 | 0.63 | Laminar | Na_{0.7}Mn_{0.5}Ni_{0.2}Co_{0.3}O₂ | 164 |
| Comp. Example 2 | 0.68 | Laminar | Na_{0.7}Mn_{0.5}Fe_{0.5}O₂ | 175 |

As seen in Table 1, the coin cells of Examples 1 and 2 had larger reversible capacity compared to the coin cells of Comparative Examples 1 and 2. It is thought that the sphericity of the positive electrode active material particles of Examples 1 and 2 mentioned above resulted in the inhibited crystallite growth, smaller crystallites, lower reaction resistance and lower diffusion resistance inside the active material, compared to the laminar positive electrode active material particles of Comparative Examples 1 and 2. It is also thought that the sphericity resulted in lower tortuosity, lowering the ion conductive resistance in the layer forming the positive electrode. Presumably this also improved the rate characteristic and increased the reversible capacity. This confirmed the effect of spheroidization of P2-type positive electrode active material particles.

### 7. Supplement

Positive electrode active material particles having a specific chemical composition were used in the Example described above, but the chemical composition of the positive electrode active material particles of the disclosure is not limited to this Example. Based on knowledge of the present inventors, however, when one or more from among Mn, Ni and Co are present as transition metals, the P2-type structure undergoes crystal growth in a specific direction, tending to form a laminar structure. The problem to be solved by the technology of the present disclosure can be considered especially notable when at least one transition metal from among Mn, Ni and Co is present.

### 8. Summary

Based on the aforementioned Examples, a positive electrode active material particle (1) having a P2-type structure, (2) comprising at least one transition metal element from among Mn, Ni and Co, with Na and O, as constituent elements, and (3) being spherical, can be described as exhibiting high reversible capacity.

### REFERENCE SIGNS LIST

10 Positive electrode
11 Positive electrode active material layer
12 Positive electrode collector
20 Electrolyte layer
30 Negative electrode
31 Negative electrode active material layer
32 Negative electrode collector
100 Sodium ion secondary battery

## Claims

1. A positive electrode active material particle,
having a P2-type structure,
comprising at least one transition metal element from among Mn, Ni and Co, with Na and O, as constituent elements, and
being spherical.

2. The positive electrode active material particle according to claim 1, wherein
the surface of the particle comprises crystallites.

3. The positive electrode active material particle according to claim 2, wherein
the diameters of the crystallites are less than 1 µm.

4. The positive electrode active material particle according to any one of claims 1 to 3, wherein
the positive electrode active material particle comprises Na, Mn, Ni, Co and O as constituent elements.

5. The positive electrode active material particle according to any one of claims 1 to 3, wherein
the positive electrode active material particle comprises Na, Mn, Fe and O as constituent elements.

6. The positive electrode active material particle according to any one of claims 1 to 4, wherein
the positive electrode active material particle has a chemical composition represented by NaₐMnₓ₋ₚNi_{y-q}Co_{z-r}M_{p+q+r}O₂ (where 0 < a ≤ 1.00, x + y + z = 1, 0 ≤ p + q + r ≤ 0.15, and M is at least one element selected from among B, Mg, Al, K, Ca, Ti, V, Cr, Fe, Cu, Zn, Ga, Ge, Sr, Y, Zr, Nb, Mo and W).

7. A sodium ion secondary battery (100) having a positive electrode (10), an electrolyte layer (20) and a negative electrode (30), wherein
the positive electrode (10) comprises the positive electrode active material particle according to any one of claims 1 to 6.

8. A method for producing a positive electrode active material particle, the method including:
obtaining a precursor particle,
covering the surface of the precursor particle with a Na salt to obtain a covered particle, and
firing the covered particle to obtain a Na-containing transition metal oxide particle having a P2-type structure,
wherein:
the precursor particle is composed of a salt containing one or more transition metal elements from among Mn, Ni and Co,
the precursor particle is spherical,
the covered particle is obtained by covering 40 area% or more of the surface of the precursor particle with the Na salt, and
the Na-containing transition metal oxide particle is spherical.
